# EUROPEAN PATENT SPECIFICATION

(11) **EP 4 157 929 B1**
(45) Date of publication and mention of the grant of the patent: **08.04.2026**
(21) Application number: 21730688.5
(22) Date of filing: 28.05.2021
(51) Int. Cl.: C08J 9/00, C08J 9/30, C08J 9/32

(54) **THERMAL INSULATING SLURRY AND METHOD FOR ITS PREPARATION**
WÄRMEDÄMMSCHLÄMME UND VERFAHREN ZU IHRER HERSTELLUNG
BOUILLIE THERMO-ISOLANTE ET PROCÉDÉ POUR SON PRÉPARATION

(30) Priority: 29.05.2020 NL 2025711
(43) Date of publication of application: 05.04.2023
(73) Proprietor: Takkenkamp Innovatie B.V., 7021 BZ Zelhem (NL)
(72) Inventor: VAN MILT, Martinus Jan, 7021 BZ Zelhem (NL); CRÈVECOEUR, Rob, 7021 BZ Zelhem (NL)
(74) Representative: Arnold & Siedsma
(86) International application number: PCT/NL2021/050342
(87) International publication number: WO 2021/242106

(56) References cited:
- US-A1- 2004 077 738
- US-A1- 2015 183 947
- US-A1- 2016 032 584
- TAKKENKAMP GROEP: "TROTS - Ervaar de betrokkenheid en passie van Takkenkamp I Juli 2020 AIROFILL WAAR HET ALLEMAAL BEGON MOOI PROJECT DE WEEK VAN", 1 July 2020 (2020-07-01), XP055759237, Retrieved from the Internet <URL:https://adobeindd.com/view/publications/c62905cf-e22e-434f-a228-0900e56dee7f/1/publication-web-resources/pdf/TROTS|_juli2020.pdf> [retrieved on 20201211]

## Description

### Technical field of the invention

The technical field of the invention relates to a thermally insulating slurry composition and a method for manufacturing the thermally insulating slurry composition. The invention further relates to the use of the thermally insulating slurry composition for thermally insulating a part of a building, particularly a cavity wall. The invention relates particularly to a cavity wall of a building, wherein the thermally insulating slurry composition according to the invention is arranged in a hollow space of the cavity wall.

### Background

Aerogel is a special material. It is microporous on a nano-scale and has a particularly large internal surface area. The pore structure is so small that an enclosed air molecule is hardly able to move, and almost no heat transfer can therefore take place. Due to the highly porous structure, hardly any heat transfer takes place through the solid mass either. Aerogel is therefore a well-insulating material. The object of the invention is to make use of these special features for insulating purposes.

One of the possible embodiments is in cavity walls. Cavity walls have existed since about 1920 and are used in, among other places, the Netherlands, Belgium, the United Kingdom and parts of Germany and France. By filling the space between the two walls with an insulating material the heat transfer through the wall decreases. A saving in respect of energy consumption can hereby be achieved, and the comfort of the home increases hereby.

US2015/183947 A1 discloses a thermal insulation material capable of being obtained from the mixture of at least the following elements: an aqueous foam; silica aerogel particles; and at least one binder selected from an organic binder and a mineral binder.

Owing to their very low density and high porosity, aerogels, particularly those with a porosity greater than 60% and densities lower than 0.6 gr/cm³, have an extremely low thermal conductivity (λ value 0.016 and lower), and therefore find application in heat-insulating materials.

The very high porosity results in a low mechanical stability of the final aerogel. The low density further makes the powdered aerogel as such difficult to incorporate in this form as insulating material in cavity walls.

Aerogel as powdered material is particularly light, dusts, and as it were 'runs' off through the smallest of holes. Application of an aerogel-based insulating material imposes additional requirements on the processing of the insulating material. The first challenge is that the insulating material is pumpable so it can be inserted into the cavity via small holes drilled into the wall. An additional desire is that it also remains liquid for a short time in order to form a closed structure.

Once some time has passed, it is desirable for the mass to change to a rigid form so that no sagging occurs or the mass does not run off through small openings or cracks. The structure which is formed is preferably form-retaining and has minimal shrinkage. There are furthermore wishes in respect of the reversibility, i.e. the solid mass not being cohesive to such a degree that it cannot be removed from the cavity with existing (suctioning and cutting) techniques.

The invention relates to a thermally insulating composition and a method for manufacture and use of the thermally insulating composition as insulating material which can be arranged in, among other things, cavity spaces, on substrates and on diverse ground surfaces with the objective of reaching a conductivity < 0.030 W/mK. In particular embodiments an object is a volume shrinkage of the applied product of less than 5%.

### Summary

According to a first aspect of the invention, a method is provided for manufacturing a thermally insulating slurry composition, comprising the steps of:
a. providing:
   i. aerogel particles;
   ii. binding agent, this preferably being a polymer binder, which is *optionally* based on an aqueous dispersion of the polymer binder;
   iii. fibrous material, and optionally filler material;
   iv. surfactant;
   v. thickening agent; and
   vi. liquefier;
   wherein the step additionally comprises of providing a foaming agent (component vii.) and/or the surfactant is able to act as foaming agent;
b. forming a mixture comprising the binding agent (component ii.), the surfactant (component iv.), the thickening agent (component v.) and a water-borne carrier liquid and/or organic solvent-borne carrier liquid;
c. allowing the mixture obtained in step b. to thicken, this resulting in a thickened mixture;
d. wherein the step of forming the mixture additionally comprises of mixing the fibrous material, and optionally the filler material (component iii.) into the mixture, or wherein the method comprises of adding the fibrous material, and optionally filler material to the thickened mixture obtained in step c.;
e. wherein the step of forming the mixture additionally comprises of mixing the liquefier (component vi.), optionally including the foaming agent (component vii.), into the mixture, or wherein the method comprises a step of mixing the liquefier (component vi.), optionally including the foaming agent (component vii.), with the thickened mixture obtained in step c.; and
f. mixing the aerogel particles (component i.) with the thickened mixture obtained in step c.; wherein a thermally insulating slurry composition is obtained with the following properties:
   - a nominal viscosity of a minimum of 100.000 mPa.s and a maximum of 200.000 mPa.s, preferably in the range of 110.000 - 170.000 mPa.s, measured with Brookfield RV 7, at 10 rpm and 25°C;
   - a secondary viscosity after disruption which is lower than the nominal viscosity, both measured with Brookfield RV 7, at 10 rpm and 25°C.

In a further embodiment the filler material is a solid filler material.

In a second aspect of the invention a thermally insulating slurry composition is provided, comprising:
i. aerogel particles;
ii. binding agent, this preferably being a polymer binder;
iii. fibrous material, and optionally filler material;
iv. surfactant;
v. thickening agent;
vi. liquefier; and
vii. a water-borne carrier liquid and/or organic solvent-borne carrier liquid;

wherein the slurry composition additionally comprises a foaming agent and/or the surfactant is able to act as foaming agent;
wherein the content of the aerogel particles is 70-99% by weight of the dry weight of the slurry composition, and the content of the polymer binder is 1-30% by weight of the dry weight of the slurry composition;
and wherein the thermally insulating slurry composition has the following properties:
   - a nominal viscosity of a minimum of 100.000 mPa.s and a maximum of 200.000 mPa.s, preferably in the range of 110.000 - 170.000 mPa.s, measured with Brookfield RV 7, at 10 rpm and 25°C;
   - a secondary viscosity after disruption which is lower than the nominal viscosity, both measured with Brookfield RV 7, at 10 rpm and 25°C.

The thermally insulating slurry composition can be applied as insulating material, among other things for introducing into a cavity wall, such as by pumping, optionally with a gaseous or liquid additive. The invention is based on the application of polymer binders, thickening agent, liquefier and foaming agent, which make it possible to obtain, with a relatively high proportion of aerogel, a pumpable mass which, after pumping, for instance pumping during injection into a hollow space, sets and becomes form-retaining quickly after a pump pressure falls away, such as in a cavity or in another application.

In embodiments of the invention the surfactant is able to act as foaming agent, or a foaming agent is provided in the slurry composition, or the surfactant acts as a foaming agent and another foaming agent is additionally provided in the slurry composition for the purpose of forming foam.

The nominal viscosity of the thermally insulating slurry composition is a minimum of 100.000 mPa.s and a maximum of 200.000 mPa.s. The nominal viscosity is the viscosity of the material which has not been stirred immediately prior to the viscosity measurement. (That is, the material has been left to rest for a longer time so that its nominal viscosity is once again reached.) The nominal viscosity is measured with Brookfield RV 7, at 10 rpm and 25°C.

The secondary viscosity after disruption of the thermally insulating slurry composition is lower than the nominal viscosity. The secondary viscosity after disruption is determined following 1 minute of manual disruption, and is measured with Brookfield RV 7, at 10 rpm and 25°C. This viscosity is determined almost immediately after disruption.

The nominal viscosity and the secondary viscosity after disruption of the thermally insulating slurry composition supports the composition in being sufficiently liquid to form a substantially closed structure in a hollow space and, once some time has passed, the composition being able to change to a relatively rigid form. This secondary viscosity furthermore prevents the composition from being able to run off through small holes or gaps.

In an embodiment the secondary viscosity after disruption of the thermally insulating slurry composition is a minimum of 10.000 mPa.s and a maximum of 100.000 mPa.s. The secondary viscosity is measured with Brookfield RV 7, at 10 rpm and 25°C, immediately after the thermally insulating slurry composition has been thinned by the manual disruption. The manual disruption of the thermally insulating slurry composition is performed for 1 minute.

The thinning effect of the disruption, manifest in that the secondary viscosity is lower than the nominal viscosity after disruption of the thermally insulating slurry composition, supports the thermally insulating slurry composition in being processable, such as pumpable. This thermally insulating slurry composition is for instance injectable into a cavity wall via small holes, drilled into the wall, in the cavity wall.

The secondary viscosity is more preferably in the range of 30.000 - 95.000 mPa.s, particularly a minimum of 40.000 mPa.s, a minimum of 50.000 mPa.s, or a minimum of 60.000 mPa.s.

The aerogel particles reduce the heat transfer of the thermally insulating slurry composition. A higher content of aerogel particles will generally reduce the heat transfer (i.e. the lambda value).

With the thermally insulating slurry composition according to the invention a thermal lambda value of 0.030 WmK or lower than 0.030 WmK can be achieved, preferably < 0.025 W/mK, measured under the condition that the thermally insulating slurry composition has been dried to a constant weight at 103°C. The lambda value is determined in accordance with the standard EN12667.

In embodiments a thermal lambda value of 0.012 W/mK - 0.030 W/mK can be achieved for an insulating material on the basis of aerogel particles.

The thickening agent both increases the nominal viscosity and improves the secondary viscosity, i.e. strengthens the thinning effect of the thermally insulating slurry composition under the influence of shearing.

The thickening agent can moreover be mixed into the water-borne carrier liquid and/or organic solvent-borne carrier liquid during step b., wherein a thickening effect thereof does not occur until a later moment, during step c. This has the advantage that the binding agent and possible other components, such as the optional fibrous material and/or filler material, can be mixed into the water-borne carrier liquid and/or organic solvent-borne carrier liquid well.

The thickening agent further has the advantage that the thickened composition, i.e. the thickened water-borne carrier liquid and/or organic solvent-borne carrier liquid, improves the mixing in of the aerogel particles and improves the stability of a distribution of the aerogel particles, such as in the form of a dispersion.

The thermally insulating slurry composition is further composed on the basis of at least one binding agent, this preferably being a polymer binder, which in embodiments can be an organic or inorganic binding agent. The aerogel particles make it difficult to produce insulating compositions that are sufficiently cohesive. The binding agent provides for sufficient binding between the aerogel particles.

Compositions with a greater quantity of aerogel particles require an increased quantity of binding agent for binding of the aerogel, which can have an adverse effect on the thermal conductivity of the dried composition. The thermally insulating slurry composition therefore preferably has a higher aerogel particle content than binding agent content.

The aerogel particles, particularly hydrophobic aerogel particles, are usually difficult to disperse in a water-borne carrier liquid and/or organic solvent-borne carrier liquid. The surfactant in the thermally insulating slurry composition supports or improves the fine dispersal of the aerogel particles in the water-borne carrier liquid and/or organic solvent-borne carrier liquid, such as by supporting wetting of the aerogel particles. In embodiments the surfactant can also have a foaming action. This foaming supports the mixing in and dispersal of the aerogel particles in the water-borne carrier liquid and/or organic solvent-borne carrier liquid.

In an embodiment the thickened mixture obtained in step c. has a nominal viscosity of a minimum of 10.000 mPas, preferably a minimum of 15.000 mPa.s, measured with Brookfield RV 6, at 10 rpm and 20°C.

In an embodiment the thickened mixture obtained in step c. has a secondary viscosity of a minimum of 5.000 mPas and less than 15.000 mPa.s, measured with Brookfield RV 6, at 10 rpm and 20°C after disruption of the mixture (which stirring speed, time of stirring, measuring moment).

In an embodiment, having the mixture thicken comprises of increasing the pH of the water-borne carrier liquid and/or organic solvent-borne carrier liquid from a pH below 8.0 to a pH above 8.0, preferably to a pH in the range of 9.0 - 10.0, which results in the thickening of the mixture.

In an embodiment, having the mixture thicken comprises of adding an alkaline water-soluble component, preferably selected from at least one of ammonium hydroxide, ethanolamine, diethanolamine or triethanolamine, in order to increase the pH.

In accordance with the invention step d. comprises of stirring the thickened mixture with the fibrous material, and optionally filler material so that a homogenous mixture is obtained.

In an embodiment step e. comprises of forming foam in the thickened mixture.

In an embodiment step f. comprises of introducing air into the mixture while or before the aerogel particles are added to the thickened mixture.

In an embodiment step f. of introducing air into the mixture comprises of applying a vacuum pressure in the thickened mixture. This is particularly advantageous in a batch process.

In an embodiment step f. comprises of continuously applying shearing in the thickened mixture during addition of the aerogel particles.

In an embodiment the aerogel particles have a grain distribution such that the aerogel particles in a bulk stacking have a volume share of between 50-75% by volume, preferably between 65-75% by volume.

In an embodiment the aerogel particles have a grain distribution with > 90% by weight within the range of 0.1 - 4 mm, wherein more than 30% by weight has a grain size < 1 mm and more than 30% by weight has a grain size > 2 mm, wherein preferably more than 10% by weight has a grain size < 0.3 mm.

In an embodiment the aerogel particles are a mixture of 50% by weight particles with an average grain distribution < 1 mm and 50% by weight particles with an average grain distribution > 2 mm.

In an embodiment the bulk density of the aerogel particles lies between 0.05 - 0.15 g/cm³, preferably between 0.05 - 0.10 g/cm³.

In an embodiment the aerogel particles are selected from hydrophobic aerogel particles and hydrophilic aerogel particles, and mixtures thereof, preferably hydrophobic aerogel particles.

In an embodiment step e. comprises of continuously stirring for at least 5 minutes, preferably for 5 - 60 minutes, more preferably for 5 - 30 minutes.

In an embodiment at least one of the steps b. - f., preferably at least step f., comprises of forming foam in the mixture and/or the thickened mixture.

In a particular embodiment the formation of form comprises of applying a vacuum pressure in the respective mixture.

In an embodiment the slurry composition comprises foam. The foam in the slurry composition supports the processability of the slurry composition, for instance during pumping of the slurry composition. In a preferred embodiment the foam in the slurry composition has an average diameter smaller than 5 mm, preferably smaller than 1 mm. The foam in the slurry composition preferably has an average diameter in the range of 0.01 mm to 5 mm.

In an embodiment the content of the foam is at least 30% by volume of the total of the volume of the slurry composition, preferably at least 40% by volume of the total of the volume of the slurry composition.

In an embodiment the density of the slurry composition is at most 500 g/l, preferably at most 250 g/l.

In an embodiment the slurry composition comprises 20% by weight - 70% by weight water-borne carrier liquid and/or organic solvent-borne carrier liquid, preferably 40% by weight - 60% by weight water-borne carrier liquid and/or organic solvent-borne carrier liquid.

In an embodiment the thermally insulating slurry composition has a thermal conductivity lambda in the range of 0.012 W/mK - 0.030 W/mK, preferably in the range of 0.015 W/mK - 0.025 W/mK, when the thermally insulating slurry composition has been dried to a constant weight at 103°C.

In an embodiment the thermally insulating slurry composition has a volume shrinkage of less than 5%, preferably no more than 2% volume shrinkage, after drying at 55% Rv and 22°C to a constant weight.

In an embodiment the slurry composition comprises:
a. the aerogel particles with a content of 70 - 99% by weight of the dry weight of the slurry composition;
b. the binding agent, preferably being said polymer binder, with a content of 1 - 20% by weight of the dry weight of the slurry composition;
c. the fibrous material and/or filler material with a content of 0 - 15% by weight of the dry weight of the slurry composition;
wherein the dry weight is determined after the composition has been dried to a constant weight at 103°C.

In a preferred embodiment the slurry composition comprises:
a. the aerogel particles with a content of 80 - 99% by weight of the dry weight of the slurry composition;
b. the binding agent, preferably being said polymer binder, with a content of 1 - 10% by weight of the dry weight of the slurry composition;
c. the fibrous material and/or filler material with a content of 2 - 8% by weight of the dry weight of the slurry composition;
wherein the dry weight is determined after the composition has been dried to a constant weight at 103°C.

In an embodiment the slurry composition comprises:
a. the surfactant with a content of 0.001 - 2.0% by weight of the overall weight of the slurry composition;
b. the thickening agent with a content of 0.01 - 6.0% by weight of the overall weight of the slurry composition;
c. the liquefier with a content of 0.1 - 8.0% by weight of the overall weight of the slurry composition; and
d. the foaming agent with a content of 0.01 - 8.0% by weight of the overall weight of the slurry composition.

In a preferred embodiment the slurry composition comprises:
a. the surfactant with a content of 0.01 - 1.0% by weight of the overall weight of the slurry composition;
b. the thickening agent with a content of 0.1 - 4.0% by weight of the overall weight of the slurry composition;
c. the liquefier with a content of 0.5 *-* 5.0% by weight of the overall weight of the slurry composition; and
d. the foaming agent with a content of 0.25 - 4.0% by weight of the overall weight of the slurry composition.

In an embodiment the thermally insulating slurry composition can be obtained according to the method according to the invention.

In an embodiment the thermally insulating slurry composition has a density below 300 g/l, preferably below 200 g/l, when the thermally insulating slurry composition has been dried to a constant weight at 103°C.

In an embodiment the surfactant comprises a non-ionic surfactant, preferably a polyalkyleneoxide group, this more preferably being a polyethylene oxide group, and a hydrophobic group, this more preferably comprising an aromatic group. The surfactant most preferably comprises a polyoxyethylene octylphenyl ether.

In an embodiment the thickening agent comprises a methacrylic acid acrylic ester copolymer.

In an embodiment the water-borne carrier liquid and/or organic solvent-borne carrier liquid of the slurry composition has a pH greater than 8.0.

In an embodiment the fibrous material is selected from at least one of glass fibres, carbon fibres, silicon carbide fibres, aramid fibres, polypropylene fibres, and of fibres of natural origin, such as hemp fibre and bovine hair.

In an embodiment the fibrous material comprises a glass fibre. The fibrous material preferably comprises a hollow glass fibre.

In an embodiment the fibrous material has an average fibre length of less than 5 mm.

In an embodiment the fibrous material and/or filler material has a heat conductivity lower than 1W/mK.

In an embodiment the filler material is one or more selected from the group of perlite, cork, ceramic powder. It is preferably a crushed filler material.

In an embodiment the binding agent comprises a polymer binder, which comprises a thermoplastic elastic polymer.

In an embodiment the polymer binder comprises a polyethylene-vinyl acetate copolymer.

In an embodiment the polymer binder comprises a mixture of a polyethylene-vinyl acetate with a weight content of vinyl acetate of more than 18% by weight of the polyethylene-vinyl acetate and a polyethylene-vinyl acetate with a weight content of vinyl acetate of less than 10% by weight of the polyethylene-vinyl acetate.

In an embodiment the foaming agent comprises an anionic surfactant.

In an embodiment the liquefier comprises at least one of a polycarboxylate, a lignosulfonate, a naphthalene formaldehyde condensate and a sulphonated melamine-formaldehyde condensate, wherein the liquefier preferably comprises a polycarboxylate.

In another aspect a use of the thermally insulating slurry composition according to the invention is thermally insulating a part of a building.

In another aspect according to the invention the part of the building is a roof, floor, wall and/or prefab element. For instance a building such as a house, office or factory.

In another aspect a use of the thermally insulating slurry composition according to the invention is provided which comprises of pumping the thermally insulating slurry composition, preferably during arranging of the thermally insulating slurry composition in a hollow space, preferably into the cavity of a cavity wall, wherein the thermally insulating slurry composition is preferably disrupted, preferably almost immediately prior to pumping of the thermally insulating slurry composition.

In an embodiment the pumping comprises of pumping by means of a spiral pump. A spiral pump can apply a peristaltic pressure in the slurry composition during pumping, which enhances the pumping of the slurry composition.

In another aspect a cavity wall of a building is provided, wherein a thermally insulating slurry composition according to the invention is arranged in a hollow space of the cavity wall.

### Detailed description

### Aerogel particles

Suitable aerogels for the composition according to this invention are those on the basis of metal oxides suitable for the sol-gel technique, such as for instance silicon or aluminium compounds, or those on the basis of organic substances which are likewise suitable for the sol-gel technique, such as melamine-formaldehyde condensates or resorcinol-formaldehyde condensates. (American patents 5.086.085 and 4.873.218).

They can also be based on mixtures of the above stated materials. Aerogels on the basis of silicon, and particularly xerogels on the basis of silicon dioxide, are preferred. To reduce the thermal conductivity further the radiation contribution can be reduced by adding IR opacifiers, such as determined forms of soot, titanium dioxide, iron oxides, zirconium dioxide or mixtures thereof. The thermal conductivity of aerogels depends greatly on the porosity, the dimensions of the pores and the density. For these reasons, aerogels having porosities of more than 60% and densities of less than 0.6 gr/cm³ are preferred.

In a preferred embodiment the aerogel particles have hydrophobic properties, which are also preserved in the case of mechanical reduction.

In stabilizing of the aqueous suspension it is advantageous for hydrophobic groups to be covalently bonded to the internal structure of the aerogels. The use of trimethyl and dimethyl silyl groups for permanent hydrophobization of the aerogel is particularly advantageous. These groups can be introduced as described in WO 94/25 149 or by gaseous-phase reaction between the aerogel and an activated trialkyl silane derivative, such as for instance a chlorine trialkyl silane or a hexa-alkyl disilazane (R.Lier, The Chemistry of Silica, Wiley & Sons, 1979).

The hydrophobic surface groups prepared in this way reduce the dissipation factor as compared aerogels having only OH groups on the internal surface.

The proportion of aerogel particles is as high as possible, but at a content of more than 99% by weight the percentage of binding agent is too low to provide sufficient cohesion after drying of the aqueous binding agent.

In a preferred embodiment step f. is performed just before use of the thermally insulating slurry. An advantage hereof that preparing the thermally insulating slurry can for the most part be done in advance, and fewer operations need be performed just before use of the thermally insulating slurry.

Step f. is preferably performed by means of a screw mixer and/or a paddle mixer. This has the advantage that a continuous process can be achieved.

### Grain size aerogel particles

The diameter of the aerogel particles preferably lies between 4 mm and 0.1 mm. The grain form and grain size distribution can be selected such that the different end products can be prepared therewith, and shrinkage during drying lies below 4% owing to mutual stacking of the particles.

A specific grain size distribution can be achieved with a mixture of 50% aerogel having an average grain distribution < 1 mm with 50% aerogel having an average grain distribution > 2 mm, or by making use of an aerogel in which the intended grain size distribution is created in the factory.

In order to verify the grain size and distribution the aerogel sample can be composed of a mixture of at least 10 samples from different locations on the badge. Of the sample, 20 grams is placed on a vibrating laboratory screening unit with screens which are increasingly fine relative to each other.

Reproducible results are obtained with an amplitude of a maximum of 1 mm during 2 minutes of screening time. Greater amplitudes may make particles smaller and adversely affect the results.

Possible ideal grain size distributions have no horizontal steps when plotted in a graph (Fuller). They take a continuously rising form. In order to be able to approach them, grains of all sizes must be on hand. Grain curves for concrete have been compiled by Fuller, among others, on the basis of the following equation: y=100√d:D, wherein y is the passage on the screen with mesh width d, and D is the maximum grain size of the aggregate material. The equations were later developed further by, among others, Boloney, Faury et al.

### Elucidation of grain size distribution

In the case of an optimal spherical stacking fine particles fill the spaces between the coarser particles. This optimal filling also results in the optimal insulating value, expressed in the lambda value. Such a mixture is however stiff and barely processable, even during the wet stage.

A combination of additives, such as liquefier, foaming agent, is therefore desirable for obtaining on one hand a good mixing and on the other a mixture which, after become thinner again by stirring just before the pumping, can be pumped.

### Binding agent

If the binding agent contains a polymer binder, the polymer binder used is preferably based on an aqueous dispersion. For instance one which is also used as binding agent for colouring agents, adhesives and paint. The aqueous binding agent comprises at least one organic polymer, dispersed or dissolved in water and having a solid substance content of 30% or higher. Examples are: dispersions on the basis of vinyl acetate homo- and copolymers, ethylene vinyl acetate, styrene acrylate, styrene-butadiene copolymers, acrylate dispersions. Also polyvinyl alcohol, natural rubber latex, natural gums and carboxymethyl cellulose.

One or more inorganic binding agents can additionally be applied. Inorganic binding agents can consist of solutions of sodium silicate or potassium silicate, aqueous solutions of phyllosilicates, colloidal silicon dioxide and mixtures of organic and inorganic binding agents.

The polymer binder can be stabilized using surfactants or by means of protective colloids with one or more ionic and/or non-ionic surfactant. The polymer binder must further be compatible with the aerogel used.

If desired, polymer binders are selected which, after drying, provide a water-resistant agglomeration of the aerogel particles. Water-resistance can for instance be achieved by crosslinking or polymerization. It is advantageous for the solid substance content of the binding agent on one hand to be as low as possible, and for its volume ratio in the final mixture with the aerogel to be as small as possible.

Polymer binders which provide a good bond to diverse substrate surfaces can be selected. Polymer binders are preferably selected which are a copolymer and have thermoplastic elastomer phase behaviour. Such thermoplastic elastomers typically have a glass transition temperature and a melting transition, wherein an elastic stage lies between the glass transition temperature and the melting transition.

Polymer binders having a hydrophilic block and a hydrophobic block are preferably selected.

### Fibrous material and/or filler material

In order to influence determined properties, such as thermal properties, shrinkage, flow, thixotropy and stability, fibres, and optionally fillers are added. The fibrous material and/or filler material can be inorganic or organic, such as glass fibres, carbon fibres, silicon carbide fibres, aramid fibres, polypropylene fibres, also fibres of natural origin such as finely distributed hemp fibre or bovine hair, or inorganic or organic fillers such as perlite, cork, ceramic powder.

In order to prevent an increase of the heat conduction caused by the added fibres as far as possible it is necessary to search an optimum between the effectiveness of the additive and influence on the heat conduction of the final mass.

A suitable choice of fibre diameter and/or fibrous material and/or filler material makes it possible to reduce the radiation contribution to the heat conduction, and the desired increased mechanical cohesion or strength can be achieved and the shrinkage reduced at the same time.

In order to prevent an increase of the heat conduction caused by the added fibres, it is preferably the case that a) a volume ratio of the fibres is 0.1 - 30%, more preferably 1 to 10%, relative to the dried composition, and b) the heat conduction of the fibres is preferably lower than 1W/mK.

The radiation contribution of the fibres can further be reduced by making use of blackened fibres such as blackened polyester fibres or carbon fibres.

The average length of the available fibres is significant for their influence on nominal viscosity and secondary viscosity on one hand and on preventing shrinkage due to the formation of an internal network on the other. Fibres with a length greater than about 5 mm can cause blockages in the mixing machine (in the factory). Synthetic fibres with a smooth surface (polypropylene fibres) are not easy to mix, and tend to clump together. Ground carbon fibres with an average length of about 3 mm can be applied as internally reinforcing matrix. These require extra addition of surfactants in order to achieve sufficient wetting and break up the fibre bundles. The cost price is relatively high relative to readily available, very fine glass fibres. Glass fibres are highly suitable if manufactured to provide a good insulating value. They are easy to distribute in the aqueous mass, and a relatively low quantity thereof provides a good contribution to the reduction of shrinkage.

### Surfactant

These substances, also referred to as amphiphile or amphipathic compounds, are able to reduce the surface tension of a liquid. A liquid with a reduced surface tension can form large surfaces more readily. This has the result that the liquid foams readily, or can nevertheless wet materials that are more difficult to wet, such as aerogel. An amphiphile or amphipathic compound has both hydrophobic and hydrophilic properties. General amphiphilic substances are soap, detergents and lipoproteins. They as it were reduce the friction between the particles.

### Thickening agent

Aerogel is difficult to mix into water due to its highly hydrophobic character. As soon as the water has been thickened however, the aerogel experiences a certain resistance in the mixing process and is then incorporated in the water and/or the water-binding agent mixture relatively easily.

Traditional thickening agents are for instance carboxymethyl celluloses (CMC), wherein the length of the molecule determines the thickening which can be achieved. In the possible application a certain time during which the CMC absorbs water, swells up and provides the required thickening must be taken into consideration.

Suitable thickening means are not very sensitive to moisture, prevent separation of the components during storage of the composition, and can be easily dissolved in the water-borne carrier liquid and/or organic solvent-borne carrier liquid without (immediate) thickening thereof.

### Liquefier

Liquefiers reduce the nominal viscosity and/or the secondary viscosity of an aqueous mixture, such that the ratio of aqueous binding agent to solid substance (aerogel) can be optimized. Suitable liquefiers are, among others, superplasticizers.

Superplasticizers are very powerful plasticizers, although their action is based on the fact that molecules of the superplasticizer adhere to the solid particles due to adsorption on the boundary surface of grain and water. The grains take on a negative charge and repel each other. This results in a certain dispersion and a sharp increase in the fluidity of the mixture. It is hereby possible, for instance in a mortar, to suffice with less water, which then producers a better water-cement ratio. Or, as in the aerogel-water mixture, more aerogel can be added, while a mixable and processable mass is still created.

Superplasticizers are known to have the effect of modifying a concrete or cement mortar such that less water need be used and a better concrete or mortar is created thereby. The oldest, and also cheapest, are the lignosulphonates, byproducts of wood pulp processing. Further known are superplasticizers naphthalene formaldehyde condensates and sulfonated melamine formaldehyde condensates.

Polycarboxylates provide a superplasticizing effect - less water or more solid substance at an identical or even lower viscosity - and additionally the option of further adjusting properties such as flow and viscosity.

Polycarboxylates are highly suitable since they were found to have a strong effect and simultaneously produced the desired behaviour of the very thick, apparently dry mass changing into a thick liquid mass when stirred vigorously or pumped under pressure.

### Foaming agent

Foaming agents form air microbubbles in the mass, which on one hand increase the volume of the total, while the processability by means of pumping is facilitated because the fine foam bubbles function in the manner of ball bearings.

The foaming agents can be composed on the basis of proteins or synthetic products such as for instance Sulfohydroxypoly(oxy-1,2-ethandiyl)-C10-C16-alkylether, Sodium salt alkyl amine oxide. They are usually used in the preparation of foam concrete, wherein the foam is prepared separately and is mixed with the concrete mortar later. In this method the foam is obtained inter alia during mixing of the aerogel into the composition. In an embodiment a rapidly running dispersion disc introduces air, which is dispersed into fine bubbles, under the influence of a vacuum. In a continuous process pressure is built up during the continuous mixing of aerogel and a pre-mixed liquid component, whereby foam forms during the expansion. Aerogel not only has an 'airy' weight, the loose powder also contains a lot of air which is also mixed in.

### Water-borne carrier liquid and/or organic solvent-borne carrier liquid

The water-borne carrier liquid contains water. The organic solvent-borne carrier liquid contains an organic solvent. The organic solvent is preferably selected from the group of methanol, ethanol, propanol, hexane, heptane, acetonitrile, acetone, cyclopentane, pentane, benzene. Additionally, the water-borne carrier liquid and/or organic solvent-borne carrier liquid can contain cosolvents, which are preferably polar. The content of water in the water-borne carrier liquid and/or organic solvent-borne carrier liquid is preferably more than 50% by weight, preferably more than 80% by weight, particularly more than 90% by weight. In a specific embodiment the water-borne carrier liquid consists substantially of water.

Besides its very light character, aerogel has the property that it can be extremely hydrophobic. A water-borne aerogel can for instance float on water for years without absorbing any moisture whatsoever. Very different behaviour is observed in respect of oils and organic liquids, which are absorbed into the pore network of the aerogel to a very great extent. For this reason the use of organic thin liquid resins and solvents as carrier for a mixture is preferably not applicable. The use of solvents in a cavity, which indirectly forms part of the living environment, is furthermore not permitted due to fire hazard, odour, toxicity and general inconvenience in processing. Other organic solvent-borne carrier liquids, which do not have the above stated properties, can however be applied in the context of the invention without said drawbacks occurring.

The water-borne carrier liquid and/or organic solvent-borne carrier liquid is one of the main ingredients of the composition for making it pumpable. In the storage tanks it must remain bound, and the mixture must not separate. The combination with substances affecting rheology, such as surfactant, thickening agent, liquefier and/or foaming agent, plays a crucial role here. They retain the water-borne carrier liquid and/or organic solvent-borne carrier liquid and ensure that, both in storage and later in a hollow space such as a cavity, the mixture relatively quickly takes on a semi-solid form which changes to a form-retaining, dry, highly insulating layer during evaporation and diffusion, such as through the cavity walls.

By exerting a force on the semi-solid mixture, for instance stirring or pumping under pressure, it changes to a thick, pumpable liquid. Forms of energy, read: shearing stress due to the thickened mixture.

The content of water-borne carrier liquid and/or the content of organic solvent-borne carrier liquid, i.e. respectively the water content and/or organic solvent content, can vary depending on the production method or whether necessary for processing.

### Foam

Due to the great difference in density between the aerogel and the water-borne carrier liquid and/or organic solvent-borne carrier liquid and the size of the aerogel particles, the composition has a tendency to separate during the period of storage and application. The tendency to separate can be reduced by reducing the difference in density between the aerogel particles and the water-borne carrier liquid and/or organic solvent-borne carrier liquid, for instance by foaming the water-borne carrier liquid and/or organic solvent-borne carrier liquid.

Because the water-borne carrier liquid and/or organic solvent-borne carrier liquid has an additional effect on the final thermal conductivity of the dried and deformed object or layer, foaming of the water-borne carrier liquid and/or organic solvent-borne carrier liquid is of additional importance.

The foam furthermore has an additional effect on the limitation of shrinkage of the dried and deformed object or layer.

### Foaming

Foaming can be realized with the use of special foaming agents which are added to the composition, or in the form of an additional process step wherein a vacuum is applied during the mixing process or by mixing air into the mixture or adding it to the mixture under high pressure during the application.

In the two possible preparation methods: addition of aerogel by means of vacuum or by continuous addition in a mixer, such as a forced action mixer, air is sucked in along with the aerogel. In the mixing process with vacuum the aerogel is as it were sucked through the basic mass of thickened binding agent and additives from the underside of a vessel, and immediately mixed by means of the continuously rotating dispersion disc and scraper.

The drawback of dust nuisance due to fine aerogel particles is thus kept under control, and an efficient mixing is achieved at the same time.

In a continuous process the aerogel is admitted into the mixture from a silo in dosed manner. In both cases air is entrained and, in the mixing process, finely distributed until a foam-like structure is achieved.

### Suitable rheology for application

The fluidity must be preserved for a short time so that the mass is able to shape itself to the space to be filled, after which the particles 'set' in the still wet mass and a solid form is taken on, which is also preserved afterward owing to the virtual absence of shrinkage (a result of polymer binder and optional fibre) and, conversely, sufficient elasticity (choice of polymer binder).

### Measuring methods

The nominal viscosity and degree of secondary viscosity are determined using Brookfield viscometry (NIST certified).

For the nominal viscosity, a short time is waited after lightly stirring the material and after a test beaker is filled with a spatula, pressed down in and levelled off, and the nominal viscosity is measured at 25°C with spindle RV 7. The measurement programme is as follows:

**Table 1: measurement programme nominal viscosity and secondary viscosity**

| Step | Speed | Measuring time |
|---|---|---|
| (#) | (RPM) | (s) |
| 1 | 2.5 | 10 |
| 2 | 5 | 10 |
| 3 | 10 | 10 |
| 4 | 20 | 10 |
| 5 | 50 | 10 |
| 6 | 20 | 10 |
| 7 | 10 | 10 |
| 8 | 5 | 10 |
| 9 | 2.5 | 10 |

The measurement of the secondary viscosity is determined according to the same measurement programme at 25° with spindle RV 7. The material is vigorously stirred by hand for 1 minute just before the measurement so that a thinning can take place in the material as a result of the shearing in the material. The measurement is performed immediately afterwards.

The nominal viscosity and the secondary viscosity of a thickened mixture without aerogel particles is determined in similar manner as described above for the final slurry composition. However, due to significantly lower measurement values, spindle RV 6 is used in this measurement instead of RV 7.

The heat conduction is determined on the basis of a prepared mass which has been brought into a 30 * 30 * 5 cm form and has been dried to a constant weight at 103°C. The thermal conductivity is then measured and expressed in lambda value. The lambda is determined according to EN12667.

Specific weight is determined by weighing a precisely measured quantity of material after drying at 103°C.

Shrinkage is determined by measuring relative to a basic standard of 30 * 30 * 5 cm block form. The volume shrinkage of a sample with dimensions 30 * 30 * 5 cm is expressed in % of volume decrease, dried at 55% Rv and 22°C to a constant weight. The volume shrinkage is determined by measuring the decrease of the dimensions of the sample in all three directions and determining the volume after shrinkage on the basis thereof.

### Examples

### Example 1

166 grams of an aqueous dispersion of a mixture of two types of polyethylene vinyl acetate (PEVA), preferably consisting of 50% by weight PEVA polymerized with about 4% by weight vinyl acetate and 50% by weight PEVA polymerized with about 25% by weight vinyl acetate, with a solid substance content of 52% by weight in water with the addition of a non-ionogenic surfactant on the basis of alkyl polyglycol ether, is mixed with 1300 ml of water and transferred to a mixing vessel. 4 grams of polyoxyethylene octylphenyl ether (Triton X 100) is added, 44 grams of methacrylic acid-acrylic ester copolymer (Rohagit SD 15) is also added.

The mass is set to pH 9.5 with one of ammonium hydroxide, ethanolamine, diethanolamine or triethanolamine and stirred for a certain amount of time until a determined nominal viscosity is reached. This can be determined using a Brookfield viscometer.

75 grams of a very fine glass fibre (Supafill) is then added as further additive and stirred to form a homogenous mass. 122 grams of a mixture of 50% by weight hydrophobic aerogel with an average grain distribution < 1 mm (supplier Cabot) and 50% by weight with an average grain distribution > 2 mm (supplier Cabot), both with a density of 0.08 gr/cm³, is then added under vacuum.

The grain distribution of the aerogel is such that the ideal spherical stacking is approached, wherein the proportion of aerogel can rise to 75% v/v. Further additives are then added, including liquefier Viscocrete, in the form of polymer superplasticizers on the basis of polycarboxylates, and foaming agent Lightcrete, by means of which the final rheological properties of the composition are set. The mass is then mixed under vacuum for 15 minutes until a homogenous slurry is formed with a determined pseudoplasticity wherein an airy foam is created owing to application of the vacuum and stirrers. The rheological properties of the mass are determined using a Brookfield viscometer.

The composition of the thermally insulating slurry is given in Table 2:

**Table 2: composition Example 1**

| Type | Name | in [g] | content | weight [g] | % total |
|---|---|---|---|---|---|
| Aerogel particles | Aerogel (50% by weight grain size < 1mm / 50% by weight grain size > 2 mm) by Cabot | 1220 | 100% | 1220 | 42% |
| Polymer binder/dispersion | Polyethylene vinyl acetate | 166 | 52% | 86 | 3% |
| Carrier dispersion | Water | 166 | 48% | 80 | 3% |
| Fibre | Supafill | 75 | 100% | 75 | 2.6% |
| Surfactant | Triton X 100 | 4 | 100% | 4 | 0.14% |
| Thickener | Rohagit SD15 | 44 | 100% | 44 | 1.5% |
| pH auxiliary agent | Ammonium hydroxide | 10 | 25% | 2.5 | 0% |
| Carrier liquid | Water | 1300 | 100% | 1300 | 45% |
| Foaming agent | Lightcrete | 70 | 40% | 28 | 1.0% |
| Liquefier | Viscocrete | 70 | 100% | 70 | 2.4% |

The content in Table 2 indicates how much of the effective substance is present in the agent. For example, the pH auxiliary agent is a 25% solution of ammonium hydroxide in water. The foaming agent Lightcrete is a 40% solution of the effective substances in a carrier liquid.

The rheological properties of the obtained thermally insulating slurry are given in Table 3:

**Table 3: rheological properties Example 1.**

| Spindle | 2.5 rpm [mPa.s] | 5 rpm [mPa.s] | 10 rpm [mPa.s] | 20 rpm [mPa.s] | 50 rpm [mPa.s] |
|---|---|---|---|---|---|
| nominal viscosity | 560000 | 240000 | 140000 | 80000 | 40000 |
| secondary viscosity | 260000 | 150000 | 85000 | 50000 | 24000 |

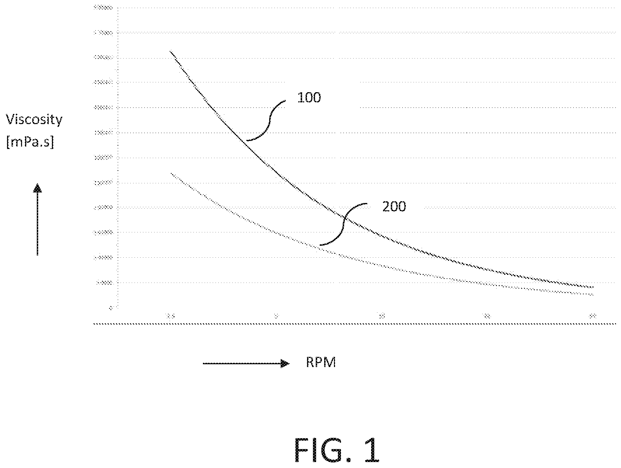

Fig. 1 shows both the nominal viscosity (line 100) and the secondary viscosity (line 200) of the thermally insulating slurry. In the programmed series of measurements (according to the measuring method) with different rotational speeds rising from 10 rpm to 50 rpm and, directly after, the same measurements in reverse order, decreasing from 50 rpm to 10 rpm, the measuring lines lie almost overlap for respectively the nominal viscosity and the secondary viscosity.

A quantity of the prepared mass of example 1 is brought into a 30 * 30 * 5 cm form and is dried to a constant weight at 103°C. The thermal conductivity is then measured and lies around or below 0.023 W/mK. The density of the dried mass lies around or below 0.5 g/cm³.

The volume shrinkage of a sample with the same dimensions 30 * 30 * 5 cm, dried at 55% Rv and 22°C to a constant weight, amounts to no more than 2%.

### Example 2

A composition as described in example 1, however now with a polyurethane-based dispersion as binding agent.

### Example 3

A composition as described in example 1, however now with a dispersion of 50% by weight polyethylene vinyl acetate on the basis of 12% vinyl acetate in water as binding agent.

### Example 4

A composition as described in example 1, however now with a dispersion on the basis of 50% by weight polyurethane, including a tackifier binder in water, as binding agent.

### Example 5

A composition as described in example 1, however now with a dispersion of 50% by weight polyethylene vinyl acetate on the basis of 25% vinyl acetate in water as binding agent.

### Comparison with alternative compositions relative to example 1 above

In this comparison one of the components of example 1 is in each case omitted from the composition on the basis of example 1, and the effect on the properties of the resulting slurry is determined.

**Table 4: comparative examples relative to Example 1**

| | Composition | | Effects |
|---|---|---|---|
| **Comparative example A** | **example 1** without Fibrous material and/or filler material | | Shrinkage greater than 5% by volume |
| **Comparative example B** | **example 1** without Foaming agent | | Less pumpable; difference of almost twice as much volume per time |
| **Comparative example C** | **example 1** without Liquefier | | Viscosity too high |
| **Comparative example D** | **example 1** without Thickening agent | | Mass separates |

### Example 6

The composition of an alternative thermally insulating slurry is given in Table 5:

**Table 5: composition Example 6**

| Type | Name | weight in [g] |
|---|---|---|
| Aerogel particles | Aerogel (50% by weight grain size < 1mm / 50 % by weight grain size > 2 mm) by Cabot | 1221 |
| Polymer binder/dispersion | Adhesive LO-1533 G | 200 |
| Carrier dispersion | Water | 2100 |
| Thickener | Rohagit SD15 | 44 |
| pH auxiliary agent | Silres BS 168 | 10 |
| Carrier liquid | Water | 1300 |
| Foaming agent | Lightcrete | 70 |
| Liquefier | Viscocrete | 70 |

The composition according to example 6 provides improved rheological properties relative to the rheological properties given in Table 3.

A quantity of the prepared mass of example 6 is brought into a 30 * 30 * 5 cm form and is dried to a constant weight at 103°C. The thermal conductivity is then measured and lies around or below 0.020 W/mK. The density of the dried mass lies around or below 0.5 g/cm³.

The volume shrinkage of a sample with the same dimensions 30 * 30 * 5 cm, dried at 55% Rv and 22°C to a constant weight, amounts to no more than 1.5%.

### Comparison with alternative grain distribution aerogel relative to example 1 above

Tested were:
- Refined powdered aerogel, using a type having on average < 1 mm grain size. After refinement an average particle size of less than 0.1 mm is obtained. It was possible to make a very 'manageable' dough therewith. It was possible to achieve a fairly good lambda value (0.025 - 0.028 W/mK). A drawback is that special measures are necessary to prevent dust formation, this form is not available industrially.
- Composition on the basis of only (100%) an aerogel having on average < 1 mm grain size. Workable mixtures contain too little aerogel, whereby the lambda values were insufficient (0.030 - 0.040 W/mK).

### Comparison with alternative binding agent relative to example 1 above

- Poly(methyl ethyl acrylate) (plextol B 500) produced a thick mass and limited manageability.
- Polyvinyl acetate (binder for EPS beads) produces too little solid substance content, increasing the proportion of binder results in too much of an adverse influence on the lambda value.
- Polyvinyl acetate (Bison wood glue) produces a thick mass and limited manageability.
- Sodium silicate (waterglass) produces too little cohesion in the final product, increasing the proportion of binder results in too much of an (i.e. an increasing) influence on the lambda value.
- Syton (colloidal silica) produces too little cohesion in the final product, also when the proportion of binder is increased.
- Polyurethane dispersion (two variants, including PU 52) produces a very brittle final product, increasing the proportion of binder results in too much of an adverse influence on the lambda value.

The following Table 6 shows the comparison with alternative binding agents:

**Table 6: comparison binding agents relative to Example 1**

| **Example** | **Binding agent** | **ADVERSE EFFECTS** | **LAMBDA [W/mK]** | **SHRINKAGE [% by Volume]** |
|---|---|---|---|---|
| **1** | 50% by weight PEVA (4% by weight vinyl acetate) and 50% by weight PEVA (about 25% by weight vinyl acetate) | - | 0.023 | < 2% |
| **2** | polyurethane | brittle/ lambda higher | 0.032 | >25% |
| **3** | Polyethylene vinyl acetate on the basis of 12% vinyl acetate | little cohesion | 0.028 | >10% |
| **4** | Polyurethane with tackifier resin | little stability / lambda higher | 0.029 | >25% |
| **5** | Polyethylene vinyl acetate on the basis of 25% vinyl acetate | highly elastic / lambda higher | 0.028 | about 10% |
| **6** | Polyvinyl acetate (Bison wood glue); | thick mass, limited manageability | | |
| **7** | Poly(methyl ethyl acrylate) (plextol B 500); | thick mass, limited manageability | | |
| **8** | Sodium silicate | little cohesion | cannot be measured | |
| **9** | Syton | little cohesion | cannot be measured | |

### Tackifiers:

These are low-molecular compounds (oligomers) which are added to adhesive formulations in order to improve adhesion. Their glass transition temperature (T_{g}) is typically higher than that of the base polymer, although their molecular weight is much lower.

The agents that 'provide stickiness' dissolve in the polymer matrix, partially break down their structure and thereby improve the mobility and stickiness of the base polymer. They also provide functionality which enhances specific adhesion and bridging and reduces molecular cohesion, this in turn reducing the melt viscosity and the softening point of the polymer system.

The three most important groups of agents that 'provide stickiness' are hydrocarbon resins, rosin esters and polyterpenes. Hydrocarbon resins are based on petroleum ingredients, while terpenes and resin esters are extracted from pine trees.

### Comparison with alternative fibres relative to example 1 above

- Polypropylene fibres: are too long, provide little adhesion of the binder to the (smooth) fibre.
- Carbon fibres (cut): the strands detach from each other with difficulty, it has been found difficult to obtain a homogenous mixing.
- Chopped hemp fibre; forms as it were 'clumps' in the mass, it has been found difficult to obtain a homogenous distribution.
- Glass fibre (two variants, for use in polyester and Supafill, among other things); the regular variant is too course and cannot be distributed well in the mass, the Supafill is particularly fine and can be easily distributed and provides a good internal reinforcement.

### Comparison with alternative thickeners relative to example 1 above

- Carboxymethyl cellulose (CMC): has little or no effect on the building strength of the final product and remains sensitive to moisture. Tested were variants of diverse chain length.
- Tylose: Methylhydroxy ethylcellulose: has little or no effect on the building strength of the final product and remains sensitive to moisture. Examples of variants of diverse chain length:
   o Tylose MH 300 P2, low nominal viscosity, powder
   o Tylose MH 1000 P2, medium-viscous, powder
   o Tylose MH 15000 YG8, highly viscous, granulate
- Xanthan gum: has little or no effect on the building strength of the final product and remains sensitive to moisture. Requires a lot of time and high-shear mixing in order to provide sufficient thickening, great effect on nominal viscosity, also in alkaline or acid environment, provides very 'short' structure.
- Rohagit can be easily mixed as liquid. It thickens instantly and in controlled manner as soon as the pH is increased to about 8.5 - 9 and, owing to film formation, contributes to the cohesion of the final product. It then acts as binding agent.

### Comparison with alternative foaming agents relative to example 1 above

Foaming agents form air microbubbles in the mass, which on one hand increase the volume of the total, while the processability by means of pumping is facilitated because the fine foam bubbles function in the manner of ball bearings.
- Lightcrete (Sika) produces a very good result, even in the case of mixing by hand.
- Triton X 100 produces some result.

The combination of Triton X 100 in conjunction with the Lightcrete produces a very good result.

### Comparison with alternative Surfactant relative to example 1 above

The surfactant has for its object to both support wetting of the aerogel particles and to form foam during mixing of the aerogel particles into the mixture.

### Tested were:

- Lerolat N 100, non-ionogenic soap which, although it produces a certain reduction in surface tension, is not very effective as foaming agent.
- Surfynol, effective surface tension reducer but not very effective as foaming agent.
- Triton X 100, Polyethylene glycol tert-octylphenyl ether, effective surface tension reducer, enhances foam formation, is non-ionogenic.
- Elynol, effective surface tension reducer, very good cleaning agent but not very effective as foaming agent.

### Comparison with alternative liquefier relative to example 1 above

- Remmers ZM.FM: produced a clear reduction in the nominal viscosity of the mixture.
- Sika Viscocrete: produced a greater reduction in the nominal viscosity.

Although the principles of the invention have been set forth above for specific embodiments, it must be understood that this description solely provides examples and should not be deemed as limitative to the scope of protection, which is defined by the appended claims.

## Claims

1. Method for manufacturing a thermally insulating slurry composition, comprising the steps of:
a. providing:
i. aerogel particles;
ii. binding agent, this preferably being a polymer binder, which is *optionally* based on an aqueous dispersion of the polymer binder;
iii. fibrous material, and *optionally* filler material;
iv. surfactant;
v. thickening agent; and
vi. liquefier;
wherein the step additionally comprises of providing a foaming agent (component vii.) and/or the surfactant is able to act as foaming agent;
b. forming a mixture comprising the binding agent (component ii.), the surfactant (component iv.), the thickening agent (component v.) and a water-borne carrier liquid and/or organic solvent-borne carrier liquid;
c. allowing the mixture obtained in step b. to thicken, this resulting in a thickened mixture;
d. wherein, the step of forming the mixture additionally comprises of mixing the fibrous material, and *optionally* the filler material (component iii.), into the mixture, or wherein the method comprises of adding the fibrous material, and *optionally* filler material, to the thickened mixture obtained in step c.;
e. wherein the step of forming the mixture additionally comprises of mixing the liquefier (component vi.), optionally including the foaming agent (component vii.), into the mixture, or
wherein the method comprises a step of mixing the liquefier (component vi.), optionally including the foaming agent (component vii.), with the thickened mixture obtained in step c.; and
f. mixing the aerogel particles (component i.) with the thickened mixture obtained in step c.;
wherein a thermally insulating slurry composition is obtained with the following properties:
i. a nominal viscosity of a minimum of 100.000 mPa.s and a maximum of 200.000 mPa.s, preferably in the range of 110.000 - 170.000 mPa.s, measured with Brookfield RV 7, at 10 rpm and 25°C;
ii. a secondary viscosity after disruption which is lower than the nominal viscosity, both measured with Brookfield RV 7, at 10 rpm and 25°C, whereby the nominal and the secondary viscosity are determined in accordance with the method disclosed in the specification.

2. Method according to claim 1, wherein the secondary viscosity after disruption is a minimum of 10.000 mPa.s and a maximum of 100.000 mPa.s, preferably in the range of 70.000 - 90.000 mPa.s, measured with Brookfield RV 7, at 10 rpm and 25°C, and/or wherein the thickened mixture obtained in step c. has a nominal viscosity of a minimum of 10.000 mPas, preferably a minimum of 15.000 mPa.s, measured with Brookfield RV 6, at 10 rpm and 25°C, and/or wherein the thickened mixture obtained in step c. has a secondary viscosity of a minimum of 5.000 mPas and less than 15.000 mPa.s, measured with Brookfield RV 6, at 10 rpm and 25°C after disruption of the mixture, and/or wherein having the mixture thicken comprises of: increasing the pH of the water-borne carrier liquid and/or organic solvent-borne carrier liquid from a pH below 8.0 to a pH above 8.0, preferably to a pH in the range of 9.0 - 10.0, which results in the thickening of the mixture, and/or wherein having the mixture thicken comprises of adding an alkaline water-soluble component, preferably selected from at least one of ammonium hydroxide, ethanolamine, diethanolamine or triethanolamine, in order to increase the pH.

3. Method according to any one of the foregoing claims, wherein at least one of the steps b. - f., preferably at least step f., comprises of forming foam in the mixture and/or the thickened mixture, and/or, wherein step f. comprises of introducing air into the mixture while or before the aerogel particles are added to the thickened mixture, preferably wherein in step f. the introduction of air into the mixture comprises of applying a vacuum pressure in the thickened mixture, and/or wherein step f. comprises of continuously applying shearing in the thickened mixture during addition of the aerogel particles.

4. Method according to any one of the foregoing claims, wherein the aerogel particles have a grain distribution such that the aerogel particles in a bulk stacking have a volume share of between 50-75% by volume, preferably between 65-75% by volume, and/or wherein the aerogel particles have a grain distribution with > 90% by weight within the range of 0.1 - 4 mm, wherein more than 30% by weight has a grain size < 1 mm and more than 30% by weight has a grain size > 2 mm, wherein preferably more than 10% by weight has a grain size < 0.3 mm, and/or wherein the aerogel particles are a mixture of 50% by weight particles with an average grain distribution < 1 mm and 50% by weight particles with an average grain distribution > 2 mm, and/or wherein step e. comprises of: continuously stirring for at least 5 minutes, preferably for 5 - 60 minutes, more preferably for 5 - 30 minutes, and/or wherein step e. comprises of forming a foam, and/or wherein the slurry composition contains foam, and/or wherein the content of the foam is at least 30% by volume of the total of the volume of the slurry composition, preferably at least 40% by volume of the total of the volume of the slurry composition.

5. Method according to any one of the foregoing claims, wherein the density of the slurry composition is at most 500 g/l, preferably at most 250 g/l, and/or wherein the slurry composition comprises 20% by weight - 70% by weight water-borne carrier liquid and/or organic solvent-borne carrier liquid, preferably 40% by weight - 60% by weight water-borne carrier liquid and/or organic solvent-borne carrier liquid, of the overall weight of the slurry composition, and/or wherein the thermally insulating slurry composition has a thermal conductivity lambda in the range of 0.012 W/mK - 0.030 W/mK, preferably in the range of 0.015 W/mK - 0.025 W/mK, when the thermally insulating slurry composition has been dried to a constant weight at 103°C, and/or wherein the thermally insulating slurry composition has a volume shrinkage of less than 5%, preferably no more than 2% volume shrinkage, after drying at 55% Rv and 22°C to a constant weight.

6. Thermally insulating slurry composition, comprising:
i. aerogel particles;
ii. binding agent, this preferably being a polymer binder;
iii. fibrous material, and *optionally* filler material;
iv. surfactant;
v. thickening agent;
vi. liquefier; and
vii. a water-borne carrier liquid and/or organic solvent-borne carrier liquid;
wherein the slurry composition additionally comprises a foaming agent and/or the surfactant is able to act as foaming agent;
wherein the content of the aerogel particles is 70-99% by weight of the dry weight of the slurry composition and the content of the polymer binder is 1-30% by weight of the dry weight of the slurry composition;
and wherein the thermally insulating slurry composition has the following properties:
i. a nominal viscosity of a minimum of 100.000 mPa.s and a maximum of 200.000 mPa.s, preferably in the range of 110.000 - 170.000 mPa.s, measured with Brookfield RV 7, at 10 rpm and 25°C;
ii. a secondary viscosity after disruption which is lower than the nominal viscosity, both measured with Brookfield RV 7, at 10 rpm and 25°C, whereby the nominal and the secondary viscosity are determined in accordance with the method disclosed in the specification.

7. Slurry composition according to claim 6, wherein the secondary viscosity after disruption is a minimum of 10.000 mPa.s and a maximum of 100.000 mPa.s, preferably in the range of 70.00 - 90.000 mPa.s, measured with Brookfield RV 7, at 10 rpm and 25°C, and/or wherein the slurry composition comprises 20% by weight - 70% by weight water-borne carrier liquid and/or organic solvent-borne carrier liquid, preferably 40% by weight - 60% by weight water-borne carrier liquid and/or organic solvent-borne carrier liquid, of the overall weight of the slurry composition.

8. Slurry composition according to any one of the foregoing claims 6 or 7, wherein the slurry composition comprises:
a. the aerogel particles with a content of 70 - 99% by weight of the dry weight of the slurry composition;
b. the binding agent, preferably being said polymer binder, with a content of 1 - 20% by weight of the dry weight of the slurry composition;
c. the fibrous material and/or filler material with a content of 0 - 15% by weight of the dry weight of the slurry composition;
wherein the dry weight is determined after the composition has been dried to a constant weight at 103°C, and/or wherein the slurry composition comprises:
a. the surfactant with a content of 0.001 - 2.0% by weight of the overall weight of the slurry composition;
b. the thickening agent with a content of 0.01 - 6.0% by weight of the overall weight of the slurry composition;
c. the liquefier with a content of 0.1 - 8.0% by weight of the overall weight of the slurry composition; and
d. optionally the foaming agent with a content of 0.01 - 8.0% by weight of the overall weight of the slurry composition.

9. Slurry composition according to any one of the foregoing claims 6-8, wherein the thermally insulating slurry composition can be obtained according to the method according to any one of the claims 1-5.

10. Slurry composition according to any one of the foregoing claims 6-9, wherein the thermally insulating slurry composition has a thermal conductivity lambda of 0.012 W/mK - 0.030 W/mK, preferably < 0.025 W/mK, when the thermally insulating slurry composition has been dried to a constant weight at 103°C, and/or wherein the slurry composition contains foam.

11. Slurry composition according to any one of the foregoing claims 6-10, wherein the content of the foam is at least 30% by volume of the total of the volume of the slurry composition, preferably at least 40% by volume of the total of the volume of the slurry composition, and/or wherein the density of the slurry composition is at most 500 g/l, preferably at most 250 g/l, and/or wherein the thermally insulating slurry composition has a density below 300 g/l, preferably below 200 g/l, when the thermally insulating slurry composition has been dried to a constant weight at 103°C, and/or wherein the thermally insulating slurry composition has a volume shrinkage of less than 5%, preferably no more than 2%, after drying at 55% Rv and 22°C to a constant weight, and/or wherein the surfactant comprises a non-ionic surfactant, preferably a polyalkyleneoxide group, this more preferably being a polyethylene oxide group, and comprising a hydrophobic group, this more preferably comprising an aromatic group, most preferably comprising a polyoxyethylene octylphenyl ether, and/or wherein the thickening agent comprises a methacrylic acid acrylic ester copolymer.

12. Slurry composition according to any one of the foregoing claims 6-11, wherein the water-borne carrier liquid and/or organic solvent-borne carrier liquid of the slurry composition has a pH greater than 8.0, and/or wherein the fibrous material is selected from at least one of glass fibres, carbon fibres, silicon carbide fibres, aramid fibres, polypropylene fibres, and of fibres of natural origin, such as hemp fibre and bovine hair, and/or wherein the fibrous material comprises a glass fibre; preferably a hollow glass fibre, and/or wherein the fibrous material has an average fibre length of less than 5 mm, and/or wherein the fibrous material and/or filler material has a heat conductivity lower than 1W/mK, and/or wherein the binding agent comprises a polymer binder, which comprises a thermoplastic elastic polymer, and/or wherein the polymer binder comprises a polyethylene-vinyl acetate copolymer, and/or wherein the polymer binder comprises a mixture of a polyethylene-vinyl acetate with a weight content of vinyl acetate of more than 18% by weight of the polyethylene-vinyl acetate and a polyethylene-vinyl acetate with a weight content of vinyl acetate of less than 10% by weight of the polyethylene-vinyl acetate, and/or wherein the foaming agent comprises an anionic surfactant, and/or wherein the liquefier comprises at least one of a polycarboxylate, a lignosulfonate, a naphthalene formaldehyde condensate and a sulphonated melamine-formaldehyde condensate, wherein the liquefier preferably comprises a polycarboxylate.

13. Use of the thermally insulating slurry composition according to any one of the claims 6-12 for thermally insulating a part of a building.

14. Use of the thermally insulating slurry composition according to any one of the claims 6-12, comprising of pumping the thermally insulating slurry composition, preferably during arranging of the thermally insulating slurry composition in a hollow space of a cavity wall, wherein the thermally insulating slurry composition is disrupted prior to pumping of the thermally insulating slurry composition, preferably wherein the pumping is performed by means of a spiral pump.

15. Cavity wall of a building, wherein a thermally insulating slurry composition according to any one of the foregoing claims 6-12 is arranged in a hollow space of the cavity wall, and optionally additionally dried.

## Patentansprüche

1. Verfahren zum Herstellen einer wärmeisolierenden Aufschlämmungszusammensetzung, umfassend die Schritte:
a. Bereitstellen von:
i. Aerogelpartikeln;
ii. einem Bindemittel, wobei es sich dabei bevorzugt um einen Polymerbinder handelt, der *optional* auf einer wässrigen Dispersion des Polymerbinders basiert;
iii. Fasermaterial und *optional* Füllmaterial;
iv. einem Tensid;
v. einem Verdickungsmittel; und
vi. einem Verflüssiger;
wobei der Schritt zusätzlich das Bereitstellen eines Schäumungsmittels (Komponente vii.) umfasst und/oder das Tensid in der Lage ist, als Schäumungsmittel zu wirken;
b. Ausbilden einer Mischung, umfassend das Bindemittel (Komponente ii.), das Tensid (Komponente iv.), das Verdickungsmittel (Komponente v.) und eine wasserbasierte Trägerflüssigkeit und/oder organische lösungsmittelbasierte Trägerflüssigkeit;
c. Zulassen des Verdickens der in Schritt b. erhaltenen Mischung, was zu einer verdickten Mischung führt;
d. wobei der Schritt des Ausbildens der Mischung zusätzlich das Mischen des Fasermaterials und *optional des* Füllmaterials (Komponente iii.) in die Mischung umfasst, oder wobei das Verfahren das Zugeben des Fasermaterials und *optional* des Füllmaterials zu der in Schritt c. erhaltenen verdickten Mischung umfasst;
e. wobei der Schritt des Ausbildens der Mischung zusätzlich das Mischen des Verflüssigers (Komponente vi.), optional einschließlich des Schäumungsmittels (Komponente vii.), in die Mischung umfasst, oder
wobei das Verfahren einen Schritt des Mischens des Verflüssigers (Komponente vi.), optional einschließlich des Schäumungsmittels (Komponente vii.), mit der in Schritt c. erhaltenen verdickten Mischung umfasst; und
f. Mischen der Aerogelpartikel (Komponente i.) mit der in Schritt c. erhaltenen verdickten Mischung;
wobei eine wärmeisolierende Aufschlämmungszusammensetzung mit den folgenden Eigenschaften erhalten wird:
i. einer Nennviskosität von einem Minimum von 100.000 mPa.s und einem Maximum von 200.000 mPa.s, bevorzugt in dem Bereich von 110.000 bis 170.000 mPa.s, gemessen mit Brookfield RV 7, bei 10 U/min und 25 °C;
ii. einer sekundären Viskosität nach Umwälzung, die niedriger ist als die Nennviskosität, beide gemessen mit Brookfield RV 7, bei 10 U/min und 25 °C, wobei die Nenn- und die sekundäre Viskosität gemäß dem in der Beschreibung offenbarten Verfahren bestimmt werden.

2. Verfahren nach Anspruch 1, wobei die sekundäre Viskosität nach Umwälzung ein Minimum von 10.000 mPa.s und ein Maximum von 100.000 mPa.s, bevorzugt in dem Bereich von 70.000 bis 90.000 mPa.s beträgt, gemessen mit Brookfield RV 7, bei 10 U/min und 25 °C, und/oder wobei die in Schritt c. erhaltene verdickte Mischung eine Nennviskosität von einem Minimum von 10.000 mPa.s, bevorzugt einem Minimum von 15.000 mPa.s aufweist, gemessen mit Brookfield RV 6, bei 10 U/min und 25 °C, und/oder wobei die in Schritt c. erhaltene verdickte Mischung eine sekundäre Viskosität von einem Minimum von 5.000 mPa.s und weniger als 15.000 mPa.s aufweist, gemessen mit Brookfield RV 6, bei 10 U/min und 25 °C nach Umwälzung der Mischung, und/oder wobei das Verdickenlassen der Mischung umfasst: Erhöhen des pH-Werts der wasserbasierten Trägerflüssigkeit und/oder der organischen lösungsmittelbasierten Trägerflüssigkeit von einem pH-Wert unter 8,0 auf einen pH-Wert über 8,0, bevorzugt auf einen pH-Wert in dem Bereich von 9,0 bis 10,0, was zum Verdicken der Mischung führt, und/oder wobei das Verdickenlassen der Mischung das Zugeben einer alkalischen wasserlöslichen Komponente umfasst, die bevorzugt ausgewählt ist aus mindestens einem von Ammoniumhydroxid, Ethanolamin, Diethanolamin oder Triethanolamin, um den pH-Wert zu erhöhen.

3. Verfahren nach einem der vorhergehenden Ansprüche, wobei mindestens einer der Schritte b. bis f., bevorzugt mindestens Schritt f., das Ausbilden von Schaum in der Mischung und/oder der verdickten Mischung umfasst, und/oder wobei Schritt f. das Einbringen von Luft in die Mischung umfasst, während oder bevor die Aerogelpartikel zu der verdickten Mischung zugegeben werden, wobei bevorzugt in Schritt f. die Einbringung von Luft in die Mischung das Anwenden eines Vakuumdrucks in der verdickten Mischung umfasst, und/oder wobei Schritt f. das kontinuierliche Anwenden von Scherung in der verdickten Mischung während der Zugabe der Aerogelpartikel umfasst.

4. Verfahren nach einem der vorhergehenden Ansprüche, wobei die Aerogelpartikel eine solche Kornverteilung aufweisen, dass die Aerogelpartikel in einer losen Stapelung einen Volumenanteil von 50 bis 75 Vol.-%, bevorzugt von 65 bis 75 Vol.-%, aufweisen, und/oder wobei die Aerogelpartikel eine Kornverteilung von > 90 Gew.-% innerhalb des Bereichs von 0,1 bis 4 mm aufweisen, wobei mehr als 30 Gew.-% eine Korngröße von < 1 mm aufweisen und mehr als 30 Gew.-% eine Korngröße von > 2 mm aufweisen, wobei bevorzugt mehr als 10 Gew.-% eine Korngröße von < 0,3 mm aufweisen, und/oder wobei die Aerogelpartikel eine Mischung aus 50 Gew.-% Partikeln mit einer durchschnittlichen Kornverteilung von < 1 mm und 50 Gew.-% Partikeln mit einer durchschnittlichen Kornverteilung von > 2 mm sind, und/oder wobei Schritt e. umfasst: kontinuierliches Rühren für mindestens 5 Minuten, bevorzugt für 5 bis 60 Minuten, mehr bevorzugt für 5 bis 30 Minuten, und/oder wobei Schritt e. das Ausbilden eines Schaums umfasst, und/oder wobei die Aufschlämmungszusammensetzung Schaum enthält, und/oder wobei der Gehalt des Schaums mindestens 30 Vol.-% des Gesamtvolumens der Aufschlämmungszusammensetzung, bevorzugt mindestens 40 Vol.-% des Gesamtvolumens der Aufschlämmungszusammensetzung beträgt.

5. Verfahren nach einem der vorhergehenden Ansprüche, wobei die Dichte der Aufschlämmungszusammensetzung höchstens 500 g/l, bevorzugt höchstens 250 g/l beträgt, und/oder wobei die Aufschlämmungszusammensetzung 20 Gew.-% bis 70 Gew.-% wasserbasierte Trägerflüssigkeit und/oder organische lösungsmittelbasierte Trägerflüssigkeit, bevorzugt 40 Gew.-% bis 60 Gew.-% wasserbasierte Trägerflüssigkeit und/oder organische lösungsmittelbasierte Trägerflüssigkeit umfasst, bezogen auf das Gesamtgewicht der Aufschlämmungszusammensetzung, und/oder wobei die wärmeisolierende Aufschlämmungszusammensetzung eine Wärmeleitfähigkeit Lambda in dem Bereich von 0,012 W/mK bis 0,030 W/mK, bevorzugt in dem Bereich von 0,015 W/mK bis 0,025 W/mK aufweist, wenn die wärmeisolierende Aufschlämmungszusammensetzung bei 103 °C bis zu konstantem Gewicht getrocknet wurde, und/oder wobei die wärmeisolierende Aufschlämmungszusammensetzung, nach Trocknung bei 55 % r.F. und 22 °C bis zu konstantem Gewicht, eine Volumenschrumpfung von weniger als 5 %, bevorzugt nicht mehr als 2 % Volumenschrumpfung aufweist.

6. Wärmeisolierende Aufschlämmungszusammensetzung, umfassend:
i. Aerogelpartikel;
ii. ein Bindemittel, wobei es sich dabei bevorzugt um einen Polymerbinder handelt;
iii. Fasermaterial und *optional* Füllmaterial;
iv. ein Tensid;
v. ein Verdickungsmittel;
vi. einen Verflüssiger; und
vii. eine wasserbasierte Trägerflüssigkeit und/oder organische lösungsmittelbasierte Trägerflüssigkeit;
wobei die Aufschlämmungszusammensetzung zusätzlich ein Schäumungsmittel umfasst und/oder das Tensid in der Lage ist, als Schäumungsmittel zu wirken;
wobei der Gehalt der Aerogelpartikel 70 bis 99 Gew.-% des Trockengewichts der Aufschlämmungszusammensetzung beträgt und der Gehalt des Polymerbinders 1 bis 30 Gew.-% des Trockengewichts der Aufschlämmungszusammensetzung beträgt;
und wobei die wärmeisolierende Aufschlämmungszusammensetzung die folgenden Eigenschaften aufweist:
i. eine Nennviskosität von einem Minimum von 100.000 mPa.s und einem Maximum von 200.000 mPa.s, bevorzugt in dem Bereich von 110.000 bis 170.000 mPa.s, gemessen mit Brookfield RV 7, bei 10 U/min und 25 °C;
ii eine sekundäre Viskosität nach Umwälzung, die niedriger ist als die Nennviskosität, beide gemessen mit Brookfield RV 7, bei 10 U/min und 25 °C, wobei die Nenn- und die sekundäre Viskosität gemäß dem in der Beschreibung offenbarten Verfahren bestimmt werden.

7. Aufschlämmungszusammensetzung nach Anspruch 6, wobei die sekundäre Viskosität nach Umwälzung ein Minimum von 10.000 mPa.s und ein Maximum von 100.000 mPa.s, bevorzugt in dem Bereich von 70.000 bis 90.000 mPa.s beträgt, gemessen mit Brookfield RV 7, bei 10 U/min und 25 °C, und/oder wobei die Aufschlämmungszusammensetzung 20 Gew.-% bis 70 Gew.-% wasserbasierte Trägerflüssigkeit und/oder organische lösungsmittelbasierte Trägerflüssigkeit, bevorzugt 40 Gew.-% bis 60 Gew.-% wasserbasierte Trägerflüssigkeit und/oder organische lösungsmittelbasierte Trägerflüssigkeit umfasst, bezogen auf das Gesamtgewicht der Aufschlämmungszusammensetzung.

8. Aufschlämmungszusammensetzung nach einem der vorhergehenden Ansprüche 6 oder 7, wobei die Aufschlämmungszusammensetzung umfasst:
a. die Aerogelpartikel mit einem Gehalt von 70 bis 99 Gew.-% des Trockengewichts der Aufschlämmungszusammensetzung;
b. das Bindemittel, bevorzugt der Polymerbinder, mit einem Gehalt von 1 bis 20 Gew.-% des Trockengewichts der Aufschlämmungszusammensetzung;
c. das Fasermaterial und/oder Füllmaterial mit einem Gehalt von 0 bis 15 Gew.-% des Trockengewichts der Aufschlämmungszusammensetzung;
wobei das Trockengewicht bestimmt wird, nachdem die Zusammensetzung bei 103 °C bis zu konstantem Gewicht getrocknet wurde, und/oder wobei die Aufschlämmungszusammensetzung umfasst:
a. das Tensid mit einem Gehalt von 0,001 bis 2,0 Gew.-% des Gesamtgewichts der Aufschlämmungszusammensetzung;
b. das Verdickungsmittel mit einem Gehalt von 0,01 bis 6,0 Gew.-% des Gesamtgewichts der Aufschlämmungszusammensetzung;
c. den Verflüssiger mit einem Gehalt von 0,1 bis 8,0 Gew.-% des Gesamtgewichts der Aufschlämmungszusammensetzung; und
d. optional das Schäumungsmittel mit einem Gehalt von 0,01 bis 8,0 Gew.-% des Gesamtgewichts der Aufschlämmungszusammensetzung.

9. Aufschlämmungszusammensetzung nach einem der vorhergehenden Ansprüche 6 bis 8, wobei die wärmeisolierende Aufschlämmungszusammensetzung nach dem Verfahren nach einem der Ansprüche 1 bis 5 erhalten werden kann.

10. Aufschlämmungszusammensetzung nach einem der vorangehenden Ansprüche 6 bis 9, wobei die wärmeisolierende Aufschlämmungszusammensetzung eine Wärmeleitfähigkeit Lambda von 0,012 W/mK bis 0,030 W/mK, bevorzugt < 0,025 W/mK aufweist, wenn die wärmeisolierende Aufschlämmungszusammensetzung bei 103 °C bis zu konstantem Gewicht getrocknet wurde, und/oder wobei die Aufschlämmungszusammensetzung Schaum enthält.

11. Aufschlämmungszusammensetzung nach einem der vorhergehenden Ansprüche 6 bis 10, wobei der Gehalt des Schaums mindestens 30 Vol.-% des Gesamtvolumens der Aufschlämmungszusammensetzung, bevorzugt mindestens 40 Vol.-% des Gesamtvolumens der Aufschlämmungszusammensetzung beträgt, und/oder wobei die Dichte der Aufschlämmungszusammensetzung höchstens 500 g/l, bevorzugt höchstens 250 g/l beträgt, und/oder wobei die wärmeisolierende Aufschlämmungszusammensetzung eine Dichte unter 300 g/l, bevorzugt unter 200 g/l aufweist, wenn die wärmeisolierende Aufschlämmungszusammensetzung bei 103 °C bis zu konstantem Gewicht getrocknet wurde, und/oder wobei die wärmeisolierende Aufschlämmungszusammensetzung, nach Trocknung bei 55 % r.F. und 22 °C bis zu konstantem Gewicht, eine Volumenschrumpfung von weniger als 5 %, bevorzugt nicht mehr als 2 % aufweist, und/oder wobei das Tensid ein nichtionisches Tensid, bevorzugt eine Polyalkylenoxidgruppe umfasst, wobei diese mehr bevorzugt eine Polyethylenoxidgruppe ist, und eine hydrophobe Gruppe umfasst, wobei diese mehr bevorzugt eine aromatische Gruppe umfasst, am meisten bevorzugt ein Polyoxyethylenoktylphenylether umfasst, und/oder wobei das Verdickungsmittel ein Methacrylsäure-Acrylester-Copolymer umfasst.

12. Aufschlämmungszusammensetzung nach einem der vorhergehenden Ansprüche 6 bis 11, wobei die wasserbasierte Trägerflüssigkeit und/oder organische lösungsmittelbasierte Trägerflüssigkeit der Aufschlämmungszusammensetzung einen pH-Wert größer als 8,0 aufweist, und/oder wobei das Fasermaterial ausgewählt ist aus mindestens einem von Glasfasern, Kohlenstofffasern, Siliciumcarbidfasern, Aramidfasern, Polypropylenfasern und Fasern natürlichen Ursprungs, wie Hanffaser und Rinderhaar, und/oder wobei das Fasermaterial eine Glasfaser umfasst; bevorzugt eine hohle Glasfaser, und/oder wobei das Fasermaterial eine durchschnittliche Faserlänge von weniger als 5 mm aufweist, und/oder wobei das Fasermaterial und/oder Füllmaterial eine Wärmeleitfähigkeit von weniger als 1 W/mK aufweist, und/oder wobei das Bindemittel einen Polymerbinder umfasst, der ein thermoplastisches elastisches Polymer umfasst, und/oder wobei der Polymerbinder ein Polyethylen-Vinylacetat-Copolymer umfasst, und/oder wobei der Polymerbinder eine Mischung aus einem Polyethylen-Vinylacetat mit einem Gewichtsanteil von Vinylacetat von mehr als 18 Gew.-% des Polyethylen-Vinylacetats und einem Polyethylen-Vinylacetat mit einem Gewichtsanteil von Vinylacetat von weniger als 10 Gew.-% des Polyethylen-Vinylacetats umfasst, und/oder wobei das Schäumungsmittel ein anionisches Tensid umfasst, und/oder wobei der Verflüssiger mindestens eines aus einem Polycarboxylat, einem Lignosulfonat, einem Naphthalin-Formaldehyd-Kondensat und einem sulfonierten Melamin-Formaldehyd-Kondensat umfasst, wobei der Verflüssiger bevorzugt ein Polycarboxylat umfasst.

13. Verwendung der wärmeisolierenden Aufschlämmungszusammensetzung nach einem der Ansprüche 6 bis 12 zum Wärmeisolieren eines Gebäudeteils.

14. Verwendung der wärmeisolierenden Aufschlämmungszusammensetzung nach einem der Ansprüche 6 bis 12, umfassend das Pumpen der wärmeisolierenden Aufschlämmungszusammensetzung, bevorzugt während des Anordnens der wärmeisolierenden Aufschlämmungszusammensetzung in einem Hohlraum einer Hohlwand, wobei die wärmeisolierende Aufschlämmungszusammensetzung vor dem Pumpen der wärmeisolierenden Aufschlämmungszusammensetzung umgewälzt wird, bevorzugt wobei das Pumpen mittels einer Schneckenpumpe durchgeführt wird.

15. Hohlwand eines Gebäudes, wobei eine wärmeisolierende Aufschlämmungszusammensetzung nach einem der vorhergehenden Ansprüche 6 bis 12 in einem Hohlraum der Hohlwand angeordnet ist und optional zusätzlich getrocknet ist.

## Revendications

1. Procédé permettant de fabriquer une composition de bouillie thermiquement isolante, comprenant les étapes consistant à :
a. fournir :
i. des particules d'aérogel ;
ii. un agent liant, celui-ci étant de préférence un liant polymère, qui est *facultativement* basé sur une dispersion aqueuse du liant polymère ;
iii. un matériau fibreux, et *facultativement* un matériau de charge ;
iv. un agent tensioactif ;
v. un agent épaississant ; et
vi. un liquéfacteur ;
dans lequel l'étape comprend en outre la fourniture d'un agent moussant (composant vii.) et/ou l'agent tensioactif est capable de jouer le rôle d'agent moussant ;
b. former un mélange comprenant l'agent liant (composant ii.), l'agent tensioactif (composant iv.), l'agent épaississant (composant v.) et un liquide véhicule en milieu aqueux et/ou un liquide véhicule en milieu solvant organique ;
c. laisser le mélange obtenu à l'étape b. s'épaissir, ceci résultant en un mélange épaissi ;
d. dans lequel, l'étape de formation du mélange comprend en outre le mélange du matériau fibreux, et *facultativement du* matériau de charge (composant iii.), dans le mélange, ou dans lequel le procédé comprend l'ajout du matériau fibreux, et *facultativement* du matériau de charge, au mélange épaissi obtenu à l'étape c. ;
e. dans lequel l'étape de formation du mélange comprend en outre le mélange du liquéfacteur (composant vi.), comportant facultativement l'agent moussant (composant vii.), dans le mélange, ou
dans lequel le procédé comprend une étape de mélange du liquéfacteur (composant vi.), comportant facultativement l'agent moussant (composant vii.), au mélange épaissi obtenu à l'étape c. ; et
f. mélanger les particules d'aérogel (composant i.) au mélange épaissi obtenu à l'étape c. ;
dans lequel une composition de bouillie thermiquement isolante est obtenue avec les propriétés suivantes :
i. une viscosité nominale d'un minimum de 100 000 mPa.s et d'un maximum de 200 000 mPa.s, de préférence dans la plage de 110 000 à 170 000 mPa.s, mesurée avec un Brookfield RV 7, à 10 tr/min et 25 °C ;
ii. une viscosité secondaire après perturbation qui est inférieure à la viscosité nominale, l'une et l'autre mesurées avec un Brookfield RV 7, à 10 tr/min et 25 °C, moyennant quoi la viscosité nominale et la viscosité secondaire sont déterminées conformément au procédé décrit dans la spécification.

2. Procédé selon la revendication 1, dans lequel la viscosité secondaire après perturbation est un minimum de 10 000 mPa.s et un maximum de 100 000 mPa.s, de préférence dans la plage de 70 000 à 90 000 mPa.s, mesurée avec un Brookfield RV 7, à 10 tr/min et 25 °C, et/ou dans lequel le mélange épaissi obtenu à l'étape c. a une viscosité nominale d'un minimum de 10 000 mPa.s, de préférence un minimum de 15 000 mPa.s, mesurée avec un Brookfield RV 6, à 10 tr/min et 25 °C, et/ou dans lequel le mélange épaissi obtenu à l'étape c. a une viscosité secondaire d'un minimum de 5000 mPa.s et inférieure à 15 000 mPa.s, mesurée avec un Brookfield RV 6, à 10 tr/min et 25 °C après perturbation du mélange, et/ou dans lequel le fait d'avoir le mélange qui s'épaissit comprend : l'augmentation du pH du liquide véhicule en milieu aqueux et/ou du liquide véhicule en milieu solvant organique d'un pH inférieur à 8.0 à un pH supérieur à 8,0, de préférence à un pH dans la plage de 9,0 à 10,0, qui résulte en l'épaississement du mélange, et/ou dans lequel le fait d'avoir le mélange qui s'épaissit comprend l'ajout d'un composant hydrosoluble alcalin, choisi de préférence parmi au moins l'un parmi hydroxyde d'ammonium, éthanolamine, diéthanolamine ou triéthanolamine, afin d'augmenter le pH.

3. Procédé selon l'une quelconque des revendications qui précèdent, dans lequel au moins l'une des étapes b. à f., de préférence au moins l'étape f., comprend la formation de mousse dans le mélange et/ou le mélange épaissi, et/ou, dans lequel l'étape f. comprend l'introduction d'air dans le mélange pendant que les particules d'aérogel sont ajoutées au mélange épaissi ou avant qu'elles ne le soient, de préférence dans lequel à l'étape f. l'introduction d'air dans le mélange comprend l'application d'une pression de vide dans le mélange épaissi, et/ou dans lequel l'étape f. comprend l'application continue de cisaillement dans le mélange épaissi pendant l'addition des particules d'aérogel.

4. Procédé selon l'une quelconque des revendications qui précèdent, dans lequel les particules d'aérogel ont une distribution granulométrique de telle sorte que les particules d'aérogel dans un empilement en vrac ont une part de volume comprise entre 50 et 75 % en volume, de préférence entre 65 et 75 % en volume, et/ou dans lequel les particules d'aérogel ont une distribution granulométrique avec > 90 % en poids dans la plage de 0,1 à 4 mm, dans lequel plus de 30 % en poids a une granulométrie < 1 mm et plus de 30 % en poids a une granulométrie > 2 mm, dans lequel de préférence plus de 10 % en poids a une granulométrie < 0,3 mm, et/ou dans lequel les particules d'aérogel sont un mélange de 50 % en poids de particules avec une distribution granulométrique moyenne < 1 mm et 50 % en poids de particules avec une distribution granulométrique moyenne > 2 mm, et/ou dans lequel l'étape e. comprend : l'agitation continue pendant au moins 5 minutes, de préférence pendant 5 à 60 minutes, plus préférablement pendant 5 à 30 minutes, et/ou dans lequel l'étape e. comprend la formation d'une mousse, et/ou dans lequel la composition de bouillie contient de la mousse, et/ou dans lequel la teneur de la mousse vaut au moins 30 % en volume du total du volume de la composition de bouillie, de préférence au moins 40 % en volume du total du volume de la composition de bouillie.

5. Procédé selon l'une quelconque des revendications qui précèdent, dans lequel la masse volumique de la composition de bouillie est d'au plus 500 g/l, de préférence au plus 250 g/l, et/ou dans lequel la composition de bouillie comprend 20 % en poids à 70 % en poids de liquide véhicule en milieu aqueux et/ou de liquide véhicule en milieu solvant organique, de préférence 40 % en poids à 60 % en poids de liquide véhicule en milieu aqueux et/ou de liquide véhicule en milieu solvant organique, du poids global de la composition de bouillie, et/ou dans lequel la composition de bouillie thermiquement isolante a une conductivité thermique lambda dans la plage de 0,012 W/mK à 0,030 W/mK, de préférence dans la plage de 0,015 W/mK à 0,025 W/mK, lorsque la composition de bouillie thermiquement isolante a été séchée jusqu'à un poids constant à 103 °C, et/ou dans lequel la composition de bouillie thermiquement isolante a un retrait volumique inférieur à 5 %, de préférence pas plus de 2 % de retrait volumique, après séchage à 55 % Rv et 22 °C jusqu'à un poids constant.

6. Composition de bouillie thermiquement isolante, comprenant :
i. des particules d'aérogel ;
ii. agent liant, celui-ci étant de préférence un liant polymère ;
iii. un matériau fibreux, et facultativement un matériau de charge ;
iv. un agent tensioactif ;
v. un agent épaississant ;
vi. un liquéfacteur ; et
vii. un liquide véhicule en milieu aqueux et/ou un liquide véhicule en milieu solvant organique ;
dans laquelle la composition de bouillie comprend en outre un agent moussant et/ou l'agent tensioactif est capable de jouer le rôle d'agent moussant ;
dans laquelle la teneur des particules d'aérogel va de 70 à 99 % en poids du poids sec de la composition de bouillie et la teneur du liant polymère va de 1 à 30 % en poids du poids sec de la composition de bouillie ;
et dans laquelle la composition de bouillie thermiquement isolante a les propriétés suivantes :
i. une viscosité nominale d'un minimum de 100 000 mPa.s et d'un maximum de 200 000 mPa.s, de préférence dans la plage de 110 000 à 170 000 mPa.s, mesurée avec un Brookfield RV 7, à 10 tr/min et 25 °C ;
ii. une viscosité secondaire après perturbation qui est inférieure à la viscosité nominale, l'une et l'autre mesurées avec un Brookfield RV 7, à 10 tr/min et 25 °C, moyennant quoi la viscosité nominale et la viscosité secondaire sont déterminées conformément au procédé décrit dans la spécification.

7. Composition de bouillie selon la revendication 6, dans laquelle la viscosité secondaire après perturbation est un minimum de 10 000 mPa.s et un maximum de 100 000 mPa.s, de préférence dans la plage de 70 000 à 90 000 mPa.s, mesurée avec un Brookfield RV 7, à 10 tr/min et 25 °C, et/ou dans laquelle la composition de bouillie comprend 20 % en poids à 70 % en poids de liquide véhicule en milieu aqueux et/ou de liquide véhicule en milieu solvant organique, de préférence 40 % en poids à 60 % en poids de liquide véhicule en milieu aqueux et/ou de liquide véhicule en milieu solvant organique, du poids global de la composition de bouillie.

8. Composition de bouillie selon l'une quelconque des revendications 6 ou 7 qui précèdent, dans laquelle la composition de bouillie comprend :
a. les particules d'aérogel avec une teneur de 70 à 99 % en poids du poids sec de la composition de bouillie ;
b. l'agent liant, étant de préférence ledit liant polymère, avec une teneur de 1 à 20 % en poids du poids sec de la composition de bouillie ;
c. le matériau fibreux et/ou le matériau de charge avec une teneur de 0 à 15 % en poids du poids sec de la composition de bouillie ;
dans laquelle le poids sec est déterminé après que la composition a été séchée jusqu'à un poids constant à 103 °C, et/ou dans laquelle la composition de bouillie comprend :
a. l'agent tensioactif avec une teneur de 0,001 à 2,0 % en poids du poids global de la composition de bouillie ;
b. l'agent épaississant avec une teneur de 0,01 à 6,0 % en poids du poids global de la composition de bouillie ;
c. le liquéfacteur avec une teneur de 0,1 à 8,0 % en poids du poids global de la composition de bouillie ; et
d. facultativement l'agent moussant avec une teneur de 0,01 à 8,0 % en poids du poids global de la composition de bouillie.

9. Composition de bouillie selon l'une quelconque des revendications 6 à 8 qui précèdent, dans laquelle la composition de bouillie thermiquement isolante peut être obtenue conformément au procédé selon l'une quelconque des revendications 1 à 5.

10. Composition de bouillie selon l'une quelconque des revendications 6 à 9 qui précèdent, dans laquelle la composition de bouillie thermiquement isolante a une conductivité thermique lambda de 0,012 W/mK à 0,030 W/mK, de préférence < 0,025 W/mK, lorsque la composition de bouillie thermiquement isolante a été séchée jusqu'à un poids constant à 103 °C, et/ou dans laquelle la composition de bouillie contient de la mousse.

11. Composition de bouillie selon l'une quelconque des revendications 6 à 10 qui précèdent, dans laquelle la teneur de la mousse est d'au moins 30 % en volume du total du volume de la composition de bouillie, de préférence au moins 40 % en volume du total du volume de la composition de bouillie, et/ou dans laquelle la masse volumique de la composition de bouillie est d'au plus 500 g/l, de préférence au plus 250 g/l, et/ou dans laquelle la composition de bouillie thermiquement isolante a une masse volumique inférieure à 300 g/l, de préférence inférieure à 200 g/l, lorsque la composition de bouillie thermiquement isolante a été séchée jusqu'à un poids constant à 103 °C, et/ou dans laquelle la composition de bouillie thermiquement isolante a un retrait volumique inférieur à 5 %, de préférence pas plus de 2 %, après séchage à 55 % Rv et 22 °C jusqu'à un poids constant, et/ou dans laquelle l'agent tensioactif comprend un agent tensioactif non ionique, de préférence un groupe poly(oxyde d'alkylène), celui-ci étant plus préférablement un groupe poly(oxyde d'éthylène), et comprenant un groupe hydrophobe, celui-ci comprenant plus préférablement un groupe aromatique, le plus préférablement comprenant un éther polyoxyéthylénique d'octylphényle, et/ou dans laquelle l'agent épaississant comprend un copolymère acide méthacrylique ester acrylique.

12. Composition de bouillie selon l'une quelconque des revendications 6 à 11 qui précèdent, dans laquelle le liquide véhicule en milieu aqueux et/ou le liquide véhicule en milieu solvant organique de la composition de bouillie ont un pH supérieur à 8,0, et/ou dans laquelle le matériau fibreux est choisi parmi au moins l'une parmi des fibres de verre, des fibres de carbone, des fibres de carbure de silicium, des fibres d'aramide, des fibres de polypropylène, et de fibres d'origine naturelle, telles que fibre de chanvre et poil de bovin, et/ou dans laquelle le matériau fibreux comprend une fibre de verre ; de préférence une fibre de verre creuse, et/ou dans laquelle le matériau fibreux a une longueur moyenne de fibre inférieure à 5 mm, et/ou dans laquelle le matériau fibreux et/ou le matériau de charge ont une conductivité thermique inférieure à 1 W/mK, et/ou dans laquelle l'agent liant comprend un liant polymère, qui comprend un polymère élastique thermoplastique, et/ou dans laquelle le liant polymère comprend un copolymère polyéthylène-acétate de vinyle, et/ou dans laquelle le liant polymère comprend un mélange d'un polyéthylène-acétate de vinyle avec une teneur en poids d'acétate de vinyle de plus de 18 % en poids du polyéthylène-acétate de vinyle et un polyéthylène-acétate de vinyle avec une teneur en poids d'acétate de vinyle inférieure à 10 % en poids du polyéthylène-acétate de vinyle, et/ou dans laquelle l'agent moussant comprend un agent tensioactif anionique, et/ou dans laquelle le liquéfacteur comprend au moins l'un parmi un polycarboxylate, un lignosulfonate, un condensat de naphtalène formaldéhyde et un condensat de mélamine sulfonée-formaldéhyde, dans laquelle le liquéfacteur comprend de préférence un polycarboxylate.

13. Utilisation de la composition de bouillie thermiquement isolante selon l'une quelconque des revendications 6 à 12 pour l'isolation thermique d'une partie d'un bâtiment.

14. Utilisation de la composition de bouillie thermiquement isolante selon l'une quelconque des revendications 6 à 12, comprenant le pompage de la composition de bouillie thermiquement isolante, de préférence pendant l'agencement de la composition de bouillie thermiquement isolante dans un espace creux d'un mur creux, dans laquelle la composition de bouillie thermiquement isolante est perturbée avant pompage de la composition de bouillie thermiquement isolante, de préférence dans laquelle le pompage est mis en œuvre au moyen d'une pompe à vis.

15. Mur creux d'un bâtiment, dans lequel une composition de bouillie thermiquement isolante selon l'une quelconque des revendications 6 à 12 qui précèdent est agencée dans un espace creux du mur creux, et facultativement séchée en complément.
